# EUROPEAN PATENT SPECIFICATION

(11) **EP 0 914 488 B1**
(45) Date of publication and mention of the grant of the patent: **29.12.2004**
(21) Application number: 97928764.6
(22) Date of filing: 21.05.1997
(51) Int. Cl.: G11B 5/82, C22C 32/00

(54) **MAGNETIC DISK SUBSTRATES FORMED OF CERAMIC-METAL MATRIX COMPOSITES WITH OR WITHOUT METAL CLADDING**
MAGNETPLATTENSUBSTRATE AUS KERAMIK-METALL MATRIX KOMPOSITEN MIT ODER OHNE METALLBESCHICHTUNG
SUBSTRATS DE DISQUES MAGNETIQUES CONSTITUES DE COMPOSITES EN CERAMIQUE-MATRICE METALLIQUE AVEC OU SANS PLACAGE METALLIQUE

(30) Priority: 01.07.1996 US 674140; 30.01.1997 US 791831; 04.02.1997 US 795384
(43) Date of publication of application: 12.05.1999
(73) Proprietor: DYSON US HOLDINGS, INC, Wilmington, Delaware 19801 (US)
(72) Inventor: CARDEN, Robin A., Irving, CA 92606 (US); STANISH, Raymond L., Irving, CA 92606 (US); HARRIGAN, William C., Irving, CA 92606 (US)
(74) Representative: Perrey, Ralf, Dr. Dipl.-Chem.
(86) International application number: PCT/US1997/009399
(87) International publication number: WO 1998/000572

(56) References cited:
- WO-A-96/18748
- US-A- 4 605 440
- US-A- 4 623 388
- US-A- 5 045 228
- US-A- 5 480 695
- US-A- 5 486 223

## Description

The present invention relates to a method of forming a substrate for magnetic disk recording media comprising a ceramic-metal matrix composite, and a magnetic disk substrate made by said method. The ceramic-metal matrix composite may be clad with metal to enhance the smoothness of the rigid disk substrate.

Personal computers have become common tools for data manipulation and data storage. Computers store and retrieve data using magnetic recording technology, where a magnetic film supported on a rigid disk substrate is used as the recording medium.

Magnetic recording involves use of a head, which includes a ring of magnetic material having a very narrow gap and a wire wrapped around the ring. To record or write information, a current is passed through the wire to generate a very intense field in the vicinity of the gap. If a recording medium is passed very close to the gap, it becomes permanently magnetized in response to the current. The recording is retrieved or played back by moving the recorded medium past the head and recovering the small voltage induced in the wire caused by a change in flux through the ring as the recorded magnetic information passes by the gap.

The storage capacity of typical magnetic recording disks used in personal computer hard disk drives has grown by over 70% per year from 1980 to 1991, and continues to have a high growth rate today. The density at which information can be recorded (written) and reproduced (read) on a disk surface is determined by the dimensions of the head and the accuracy with which the head can be positioned, by the magnetization level that can be achieved in the recording medium, and by the accuracy and sophistication of the reproduction electronics.

Data are recorded on the surface of a disk spinning typically at rotation speeds of approximately 5400 revolutions per minute (rpm). To avoid contact and wear, the head is designed as a slider that glides or flies just above the disk surface. Very high linear track densities can be achieved by reducing the separation between the head surface and the recording medium, thus increasing the storage capacity of the disk.

Therefore, to maximize the resolution in writing and reading and hence maximize the storage capacity of a disk, it is necessary to have a very small head with a very small gap and a very narrow track width within which information is recorded. Most importantly, it is necessary to have an extremely small flying height or separation between the head surface and the recording medium. Both the field intensity during writing and the sensitivity during reading drop dramatically as the flying height increases beyond about one-third the length of the smallest piece of recorded information. In addition, future generations of recording heads may actually be designed to contact the disks during operation. Therefore, surface roughness of the disks is excremely critical, and surfaces must be optically smooth because the bit lengths are of the same order of magnitude as the wavelength of light. Further, disk deflection during rotation, described hereinbelow, must be eliminated.

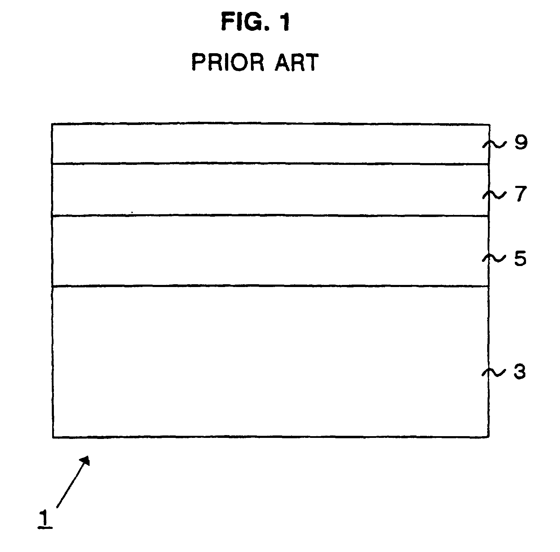

As shown in Fig. 1, a typical magnetic recording disk 1 used today is comprised of a rigid disk substrate 3 made of an aluminum-magnesium (Al-Mg) alloy, a nickel-phosphorous (Ni-P) layer 5 covering the Al-Mg substrate, a magnetic recording layer 7 covering the Ni-P layer, and a carbon-based protective layer 9 covering the magnetic recording layer. The Ni-P layer 5 serves as a hard coating that protects the Al-Mg substrate and also is generally used for texturing the surface of the substrate 3 before the magnetic recording layer 7 is deposited. Texturing produces a grooved surface which assists and improves head aerodynamics.

A current trend in disk drive technology is to optimize rigid disk substrates by making them thinner, more rigid, and harder so that more disks can be stacked within a given space and also so that they can withstand handling when used in portable disk drives. Preferably, the substrates would have a high specific modulus of elasticity E/ρ, where E is the modulus of elasticity and ρ is the density of the substrate material, at a substrate thickness that is less than 1 mm. A typical thickness of a conventional Al-Mg substrate ranges roughly from 0.6 to 0.9 mm. Hardness is important because a recording head is subject to head "slaps" or contacts with a spinning disk. These slaps can have a force of 500 to 1000 G. Head slaps are particularly prevalent in conventional Al-Mg substrates due to air turbulence-induced deflections. Because of these deflections, a conventional substrate will not have a flat profile while spinning, but will have a slight wobble causing the substrate to slap the head if the amount of wobble exceeds the flying height of the head.

Another consideration in choosing an alternative and improved rigid disk substrate material is its compatibility with standard deposition processes used to deposit the various layers in a magnetic recording disk, including the Ni-P layer, the magnetic recording layer, and the protective coating layer.

In view of the above-mentioned problems and considerations, the present invention contemplates a ceramic-metal matrix composite for use as a rigid disk substrate. The ceramic-metal matrix composite is comprised of a metal matrix material to which is added a ceramic material to improve mechanical properties such as stiffness and hardness of the metal matrix material, for example. The surface of the ceramic-metal matrix composite may be clad with a metal layer for minimizing topological irregularities in the ceramic-metal matrix composite in order to enhance the smoothness of the surface for subsequent formation of a magnetic recording layer and to make the surface of the ceramic-metal matrix composite compatible with subsequent manufacturing processes. The ceramic-metal matrix composite of the present invention is stronger, stiffer, and exhibits other significant improvements over materials used in conventional Al-Mg rigid disk substrates at a comparable cost. There are several alternative processes for producing the clad structure of the rigid disk substrate.

One such ceramic-metal matrix composite material for the use contemplated by the present invention is described in U.S. Patent No. 5,486,223, which is incorporated herein by reference.

In recent years ceramic-metal matrix composites have become desirable materials because of improvements in stiffness, strength, and wear properties. Basic ceramic-metal matrix composites are made typically with aluminum, titanium, magnesium, or alloys thereof as the metal matrix material. A selected percentage of ceramic material, within a specific range, is added to the metal matrix material to form the composite. Typical ceramic additives include boron carbide, silicon carbide, titanium diboride, titanium carbide, aluminum oxide, and silicon nitride.

Most known ceramic-metal matrix composites are made by a conventional process that introduces the ceramic material into a molten metal matrix. In order for the improved properties to be realized, the molten metal generally must wet the ceramic material so that segregation or clumping of the ceramic material is minimized. Numerous schemes with varying degrees of success have been utilized to improve the dispersion of the ceramic material in the molten metal.

Recently, powder metallurgy consolidation has emerged as an attractive alternative method for fabricating metal matrix composites, where the powders are compacted by means of hot pressing and vacuum sintering to achieve a high density billet. By following certain pressing and sintering techniques, a billet of over 99% theoretical density can be achieved.

One problem encountered in composites of aluminum and certain ceramic materials is the thermodynamic instability of those ceramic materials in molten aluminum heated to excessively high temperatures. This instability leads to the formation of unwanted precipitates at grain boundary interfaces, which are believed to have detrimental effects on the mechanical properties of the resulting composite.

WO 96/18748 discloses computer disk substrates made from a combination of crystalline ceramic powder and a metal. Preferable metals are metals that are highly reactive with the ceramic.

In view of the aforementioned shortcomings of conventional rigid disk substrates, it is an object of the present invention to provide a substrate for magnetic recording media formed of a ceramic-metal matrix composite, the substrate being particularly suitable for use in magnetic recording disks for hard disk drives. The ceramic-metal matrix composite may be clad with metal outer layers to provide additional surface smoothness.

It is another object of the present invention to provide a rigid disk substrate that substantially reduces deflection at disk rotation speeds from 0 through 12,000 rpm compared with conventional disk substrates.

It is yet another object of the present invention to provide a rigid disk substrate that can be easily ground and polished to have proper surface requirements.

It is also an object of the present invention to provide a rigid disk substrate formed of a ceramic-metal matrix composite, where the substrate is compatible with standard thin film deposition processes for magnetic recording disks.

It is a further object of the present invention to provide a magnetic recording disk having a rigid disk substrate formed of a boron carbide-metal matrix composite, a nickel-phosphorous layer, magnetic recording layer, and a protective coating layer.

It is furthermore another object of the present invention to provide a magnetic recording disk having a rigid disk substrate formed of a boron carbide-metal matrix composite, a magnetic recording layer, and a protective coating layer.

It is another object of the present invention to provide a magnetic recording disk having a rigid disk substrate formed of a metal-clad ceramic-metal matrix composite, a nickel-phosphorous layer, magnetic recording layer, and a protective coating layer.

It is yet another object of the present invention to provide a magnetic recording disk having a rigid disk substrate formed of a metal-clad ceramic-metal matrix composite, a magnetic recording layer, and a protective coating layer.

It is also an object of the present invention to provide methods for producing metal-clad ceramic-metal matrix composite rigid disk substrates.

According to the present invention, there is provided a method of forming a substrate for magnetic disk recording media comprising a ceramic-metal matrix composite, wherein the ceramic-metal matrix composite is formed by steps including:
blending dry powders of ceramic material and metal matrix material to uniformly mix the powders;
consolidating the powders by subjecting the powders to high pressures to form a billet; and
sintering the billet at elevated temperatures,
rolling the billet to produce a plate, and
machining the plate into a circular disk,
wherein the ceramic-metal matrix composite has a composition ranging from 1 to 40 weight % of ceramic material and 60 to 99 weight % of aluminum or aluminum alloy metal matrix material.

Another subject matter according to the present invention is a magnetic disk substrate made by this method.

One such ceramic-metal matrix composite, made using boron carbide ceramic material and an aluminum alloy metal matrix material, was found to be lighter, stronger, stiffer, and have higher fatigue strength than any of the 7000-series aluminum alloy materials. In addition, this composites was found to be lighter, stronger, stiffer, and have greater fatigue strength than most other metal matrix composites available. Further, this composite was found to exhibit a tensile strength of up to 108 kpsi, a yield strength of up to 97 kpsi, and a modulus of elasticity of about 14.25 to 14.50 Mpsi. This composite was also found to be readily extrudable and machinable.

The following are illustrative examples of the present invention.

According to an aspect of the present invention, a rigid disk substrate is made of a ceramic-metal matrix composite wherein the metal matrix material is aluminum or an aluminum alloy. The composite is formed by blending powders of a ceramic material and the metal matrix material to uniformly mix the powders, and then subjecting the powders to high pressures to transform the powders into a solid billet that can be extruded, cast, forged, and manufactured into rigid disk substrates for magnetic recording disks. Such disks can be rotated from 0 through 12,000 rpm and exhibit significantly reduced deflection characteristics compared with conventional disk substrates. Ceramic materials applicable for forming the ceramic-metal matrix composites for rigid disk substrates include, but are not limited to: silicon carbide; aluminum oxide; boron carbide; magnesium oxide; silicon oxide; silicon nitride; zirconium oxide; beryllium oxide; titanium diboride; titanium carbide; tungsten carbide; and combinations thereof.

According to another aspect of the present invention, a magnetic recording disk is formed of a rigid disk substrate made from a boron-carbide metal matrix composite, a nickel-phosphorous layer deposited on the rigid disk substrate, a magnetic recording layer deposited on the nickel-phosphorous layer, and a protective overcoat covering the magnetic recording layer.

According to yet another aspect of the present invention, a magnetic recording disk is formed of a rigid disk substrate made from a boron-carbide metal matrix composite and a magnetic recording layer covering the rigid disk substrate.

According to still another aspect of the present invention, a magnetic recording disk is formed of a rigid disk substrate made from a metal-clad ceramic-metal matrix composite, a nickel-phosphorous layer deposited on the rigid disk substrate, a magnetic recording layer deposited on the nickel-phosphorous layer, and a protective overcoat covering the magnetic recording layer. Suitable cladding materials include aluminum and aluminum alloys, for example.

According to yet another aspect of the present invention, a magnetic recording disk is formed of a rigid disk substrate made from a metal-clad ceramic-metal matrix composite and a magnetic recording layer supported by the rigid disk substrate.

According to still another aspect of the present invention, a rigid disk substrate formed of a metal-clad ceramic-metal matrix composite is produced by rolling an ingot having a ceramic-metal matrix composite interior and a metal exterior to produce the clad structure, referred to as "roll cladding."

According to a further aspect of the present invention, a rigid disk substrate formed of a metal-clad ceramic-metal matrix composite is produced by rolling two sheets of metal sandwiching a sheet of ceramic-metal matrix composite to produce the clad structure.

According to another aspect of the present invention, a rigid disk substrate formed of a metal-clad ceramic-metal matrix composite is produced by depositing a layer of metal on top and bottom sides of a ceramic-metal matrix composite disk to produce the clad structure. Applicable deposition techniques include, but are not limited to: physical vapor deposition such as by sputtering a metal target, for example; chemical vapor deposition such as by decomposition of metal-containing chemicals, for example; electrochemical deposition such as by electroplating, for example; and combinations of the aforementioned deposition techniques.

### BRIEF DESCRIPTION OF THE DRAWINGS

Fig. 1 is an elevational view of a cross section of a conventional magnetic recording disk;
Fig. 2 is a flow chart describing a process of consolidating the powder constituents of the composite according to an embodiment of the present invention;
Fig. 3 is a flow chart describing a process of sintering the consolidated powders into a billet of the ceramic-metal matrix composite;
Fig. 4 is an elevational view of a cross section of a rigid disk substrate according to an embodiment of the present invention;
Fig. 5 is an elevational view of a cross section of a magnetic recording disk according to an embodiment of the present invention;
Fig. 6 is an elevational view of a cross section of a magnetic recording disk according to another embodiment of the present invention;
Fig. 7 is an elevational view of a cross section of a metal-clad rigid disk substrate according to an embodiment of the present invention; and
Fig. 8 is an elevational view of a cross section of a magnetic recording disk with a metal-clad rigid disk substrate according to an embodiment of the present invention.

### DETAILED DESCRIPTION OF PREFERRED EMBODIMENTS

Preferred embodiments of the present invention are described below with reference to the accompanying drawings, in which like reference numerals represent the same or similar elements.

In one embodiment of the present invention, a rigid disk substrate is formed of a ceramic-metal matrix composite wherein the metal matrix material is aluminum or an aluminum alloy having a purity of approximately 97% when in powder form. The balance of the metal matrix material may contain trace amounts of various elements such as chromium, copper, iron, magnesium, silicon, titanium, and zinc. The ceramic material may be silicon carbide, aluminum oxide, boron carbide, magnesium oxide, silicon oxide, zirconium oxide, beryllium oxide, titanium carbide, titanium boride, tungsten carbide, or combinations thereof. According to a preferred embodiment, the ceramic powder has a particulate size typically in the range of 2 to 19 µm, with a mean or average particulate size of about 5 to 8 µm.

The weight contribution of the ceramic powder and the metal matrix powder is approximately 1 to 40% ceramic material and 60 to 99% metal matrix material.

The ceramic-metal matrix composite of the present invention is formed by blending and uniformly mixing together powders of ceramic and metal matrix material. The blended powders are then sintered to form a solid billet of ceramic-metal matrix composite.

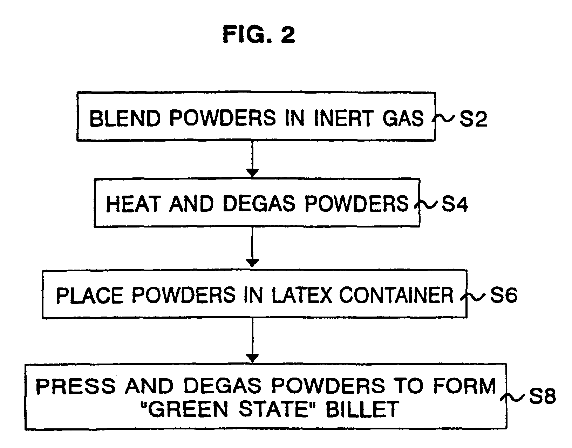

For example, as described in the flow chart of Fig. 2, the ceramic-metal matrix composite may be formed by blending ceramic powder and aluminum or aluminum alloy powder in an inert gas at step S2, heating and degassing the powders at step S4, placing the degassed powders in a container such as a latex container, for example, at step S6, and then isostatically pressing the degassed powders at about 65,000 psi at step S8. The resulting "green-state" billets are then removed from the container and sintered.

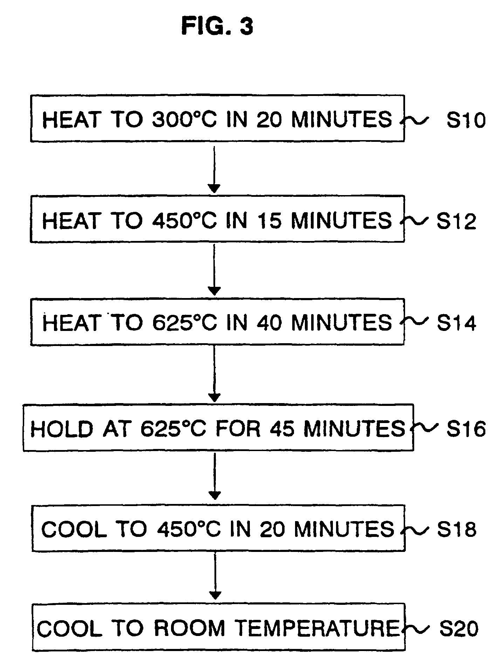

An example of a sintering process is described in the flow chart of Fig. 3. Variations of this sintering process may also be used. The "green-state" billets are heated at step S10 from room temperature to 300°C during a 20 minute ramp period to burn off a majority of moisture or water vapor contained in the billets. The billets are then heated at step S12 to 450°C during a 15 minute ramp period to burn off any remaining moisture or water vapor. Subsequently, the billets are heated at step S14 to 625°C during a 40 minute ramp period and held at 625°C at step S16 for 45 minutes. During this time sintering of the ceramic-metal matrix composite is accomplished. The sintered billets are then cooled at step 18 from 625°C to 450°C in 20 minutes using a nitrogen gas backfill. Finally, at step S20 the billets are cooled to room temperature.

The ceramic-metal matrix composites made by the above process have a density that depends on the type of ceramic and metal matrix materials used. For example, boron carbide-aluminum alloy metal matrix composites made by the above process have a density ranging from about 85% to 95% of theoretical density.

The composite material is then machined to meet the tolerances and specifications of subsequent processing steps using standard machining tools. Alternatively, the composite material may be further processed to produce rigid disk substrates with an outer layer of metal cladding, as discussed below.

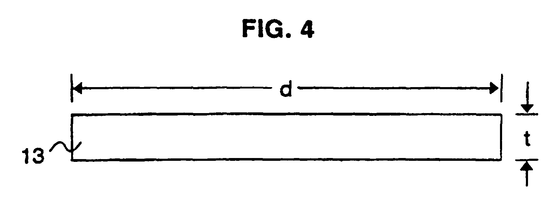

Fig. 4 schematically shows an elevational cross section of a rigid disk substrate 13 according to the present invention. The diameter d of the substrate 1 can be 5.25, 3.5, 2.5, or 1.8 inches to conform to standard sizes for rigid disk substrates. The thickness t of the substrate 13 is less than 1 mm and may be as thin as approximately 0.4 mm. The rigid disk substrate 13 can be rotated from 0 through 12,000 rpm with significantly reduced deflection characteristics compared with conventional disk substrates, and therefore can be routinely operated at any rotation speed between 0 and 12,000 rpm without excessive head slap caused by deflection of the substrate 13.

In another embodiment of the present invention, a rigid disk substrate is formed of a boron carbide-metal matrix composite wherein the metal matrix material is aluminum or an aluminum alloy having a purity of approximately 97% when in powder form. The balance of the metal matrix material may contain trace amounts of various elements such as chromium, copper, iron, magnesium, silicon, titanium, and zinc. The boron carbide powder used in forming the composite has a purity of greater than 99.5%. The boron carbide can be characterized as B₄C and is comprised of approximately 77% boron and 22% carbon by weight. Included in the boron carbide powder may be silicon, iron, and aluminum, which are present in an amount less than 3.0% by weight. Trace amounts of magnesium, titanium, and calcium may also be included.

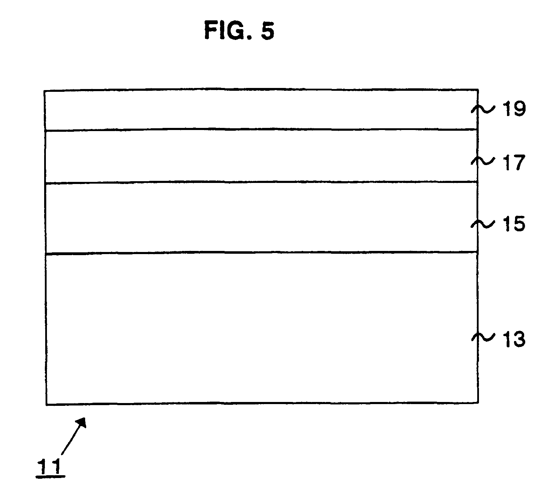

In yet another embodiment of the present invention, a magnetic recording disk 11, schematically shown in Fig. 5, is comprised of a rigid disk substrate 13 formed of a ceramic-metal matrix composite, a nickel phosphorous layer 15 overlaying the substrate 13, a magnetic recording layer 17 covering the nickel-phosphorous layer 15, and a protective coating layer 19 covering the magnetic recording layer 17. The nickel-phosphorous layer 15 is approximately 10 to 20 µm thick and is deposited onto the substrate 13 by plating techniques. The deposited nickel-phosphorous layer 15 is polished and textured to produce a grooved surface that assists and improves head aerodynamics. The magnetic recording layer 17 is a thin film of a cobalt-based alloy such as cobalt-platinum-chromium having a thickness of approximately 200 to 500 nm. Other magnetic material of sufficiently high storage density may also be used for the magnetic recording layer 17. The protective coating layer 19 is deposited to a thickness of approximately 10 to 50 nm to protect the magnetic recording layer 17. The protective coating layer 19 may be a sputter-deposited carbon layer or it may be any other non-magnetic hard coating.

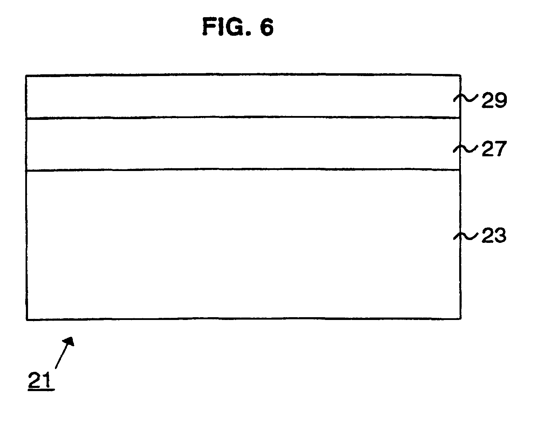

In still another embodiment of the present invention, as schematically shown in Fig. 6, a magnetic recording disk 21 is comprised of a rigid disk substrate 23 formed of a ceramic-metal matrix composite, a magnetic recording layer 27 covering the substrate 23, and an optional protective coating layer 29 covering the magnetic recording layer 27. Instead of having a nickel-phosphorous layer, the substrate 23 itself is polished and textured to produce a grooved surface to assist and improve head aerodynamics. The magnetic recording layer 27 is a thin film of a high storage-density magnetic material. The optional protective coating 29 of a non-magnetic hard layer such as sputtered carbon, for example, may be omitted because the rigid disk substrate exhibits minimal deflection at rotation speed from 0 through 12,000 rpm so that the magnetic recording disk will experience few, if any, head slaps.

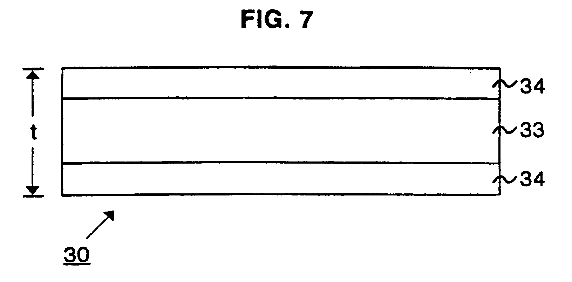

Fig. 7 schematically depicts another embodiment of the present invention, in which a rigid disk substrate 30 for magnetic recording applications is comprised of a ceramic-metal matrix composite inner layer 33 sandwiched by metal cladding layers 34 to form a cross-sectional sandwich structure. The metal cladding layers 34 serve as smoothing layers for improving the surface smoothness of the rigid disk substrate 30 by minimizing any topological irregularities that may be present in the ceramic-metal matrix composite layer 33. Materials for the metal cladding layers 34 may include aluminum, an aluminum alloy, or any metal that adheres to the ceramic-metal matrix composite and that can be deposited as a smooth, flat layer or that can be machined to be smooth and flat. The thickness of each of the metal cladding layers 34 ranges from approximately 0.025 mm to 0.125 mm, with the thickness t of the entire rigid disk substrate 30 including the metal cladding layers 34 being less than about 1 mm.

According to a preferred embodiment, the metal cladding layers are comprised of a member of the 5000-series aluminum alloy containing magnesium, for example 5550; a member of the 6000-series aluminum alloy containing magnesium and silicon, for example 6092; or a member of the 1000-series aluminum alloy consisting of almost pure aluminum, for example.

The metal-clad rigid disk substrate 30 may be made by rolling a cylindrical or other shape billet having a solid interior of ceramic-metal matrix composite surrounded by an exterior of metal cladding material. The cylindrical billet is rolled using conventional rolling techniques to produce a thin plate with a cross-sectional sandwich structure of outer metal cladding layers 34 sandwiching an inner ceramic-metal matrix composite inner layer 33. The thin plate is then machined and polished to produce a metal-clad rigid disk substrate 30, as shown in Fig. 7.

Alternatively, the metal-clad rigid disk substrate 30 may be made by rolling two sheets of metal cladding material interposed with a sheet of ceramic-metal matrix material to metallurgically bond the three sheets to form a thin plate having a cross-sectional sandwich structure of outer metal cladding layers 34 sandwiching an inner ceramic-metal matrix composite inner layer 33. The thin plate is then machined and polished to produce a metal-clad rigid disk substrate 30, as shown in Fig. 7.

In a preferred embodiment, a ceramic-metal matrix composite is rolled to a thickness of about 1.27 mm (0.05 inch). Sheets of aluminum or aluminum alloy, each having a thickness of about 0.25 mm (0.01 inch), are applied to top and bottom surfaces of the rolled composite to form a sandwich structure. The sandwich structure is rolled to a thickness of about 0.89 mm (0.035 inch) to promote metallurgical bonding between the constituent layers. The rolling acts to reduce the thickness of the metal layers without significantly reducing the thickness of the composite layer. The rolled sandwich structure is then ground to a thickness of about 0.80 mm (0.315 inch).

According to another method, the metal-clad rigid disk substrate 30 may be made by first forming a plate of ceramic-metal matrix material 33 and then depositing on top and bottom surfaces of the plate a metal cladding layer 34 to form a sandwich structure for the rigid disk substrate 30, as shown in Fig. 7. The metal cladding layers 34 may be polished to produce a desired smoothness. Deposition of the metal cladding layers 34 may be accomplished using physical vapor deposition (PVD) techniques such as sputtering of a metal target to produce a layer of metal 34 on the surface of the plate 33, for example. Deposition of the metal cladding layers 34 may also be accomplished using chemical vapor deposition (CVD) techniques such as by decomposing a metal-bearing chemical to produce a layer of metal 34 on the surface of the plate 33, for example. In addition to PVD and CVD techniques, other deposition techniques known in the art of vacuum deposition may be used. The metal cladding layer 34 may also be formed using electrochemical techniques such as electroplating, for example. In electroplating, a thin layer of metal is first deposited onto the plate 33 to serve as a continuous and conductive seed layer on top of which the remainder of the cladding layer is electroplated. The thin seed layer may be deposited by known deposition techniques such as PVD and CVD. Typically, the thickness of the seed layer is less than about 500 nm, and is a continuous layer that is void of pinholes. Once electroplated, the metal cladding layers 34 may be polished to produce a metal-clad rigid disk substrate 30 of a desired surface smoothness.

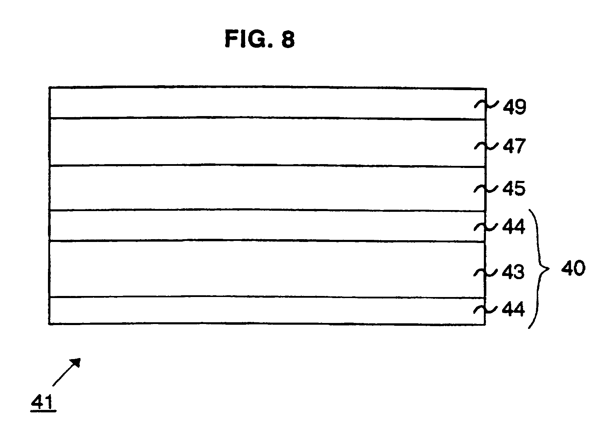

In another embodiment of the present invention, as schematically shown in Fig. 8, a magnetic recording disk 41 is comprised of a rigid disk substrate 40 formed of a ceramic-metal matrix composite 43 sandwiched by metal cladding layers 44, a nickel phosphorous layer 45 supported by the substrate 40, a magnetic recording layer 47 covering the nickel-phosphorous layer 45, and a protective coating layer 49 covering the magnetic recording layer 47.

The embodiments described above are illustrative examples of the present invention and it should not be construed that the present invention is limited to these particular embodiments. For example, although single-sided magnetic disk recording media are described above, the present invention also encompasses double-sided magnetic disk recording media, in which top and bottom magnetic recording layers are supported by top and bottom surfaces of a single rigid disk substrate.

## Claims

1. A method of forming a substrate for magnetic disk recording media comprising a ceramic-metal matrix composite, wherein the ceramic-metal matrix composite is formed by steps including:
blending dry powders of ceramic material and metal matrix material to uniformly mix the powders;
consolidating the powders by subjecting the powders to high pressures to form a billet; and
sintering the billet at elevated temperatures,
rolling the billet to produce a plate, and
machining the plate into a circular disk,
wherein the ceramic-metal matrix composite has a composition ranging from 1 to 40 weight % of ceramic material and 60 to 99 weight % of aluminum or aluminum alloy metal matrix material.

2. A magnetic disk substrate made by the method of claim 1.

3. The substrate according to claim 2, wherein the ceramic material is selected from the group consisting essentially of silicon carbide, aluminum oxide, boron carbide, magnesium oxide, silicon oxide, zirconium oxide, beryllium oxide, titanium carbide, titanium boride, tungsten carbide, and combinations thereof.

4. The substrate according to claim 2 or 3, wherein the ceramic-metal matrix composite disk has a thickness less than 1 mm.

5. The substrate according to anyone of the preceding claims, further comprising a metal cladding layer covering each of the top and bottom surfaces of the ceramic-metal matrix composite disk to form a disk sandwich structure thereof.

6. The substrate according to claim 5, wherein the metal cladding layer is aluminum or an aluminum alloy.

7. The substrate according to claim 5 or 6, wherein the metal cladding layer has a thickness ranging from 0.025 mm to 0.125 mm.

8. The substrate according to claim 5, 6 or 7, wherein the disk sandwich structure has a thickness less than 1 mm.

9. A magnetic recording disk comprising:
the substrate as defined in anyone of the preceding claims;
a nickel-phosphorous layer supported by the substrate; and
a magnetic recording layer covering the nickel-phosphorous layer.

10. The magnetic recording disk according to claim 9, further comprising a protective coating covering the magnetic recording layer.

11. The magnetic recording disk according to claim 9 or 10, wherein the substrate is textured to improve and assist head aerodynamics.

12. A method of forming a metal-clad ceramic-metal matrix composite rigid disk substrate for magnetic disk recording media as defined in preceding claims 5, 6 and 7, the method comprising the steps of:
forming a cylindrical billet having a solid interior of ceramic-metal matrix composite surrounded by an exterior of metal cladding material;
rolling the cylindrical billet to produce a thin plate with a cross-sectional sandwich structure of upper and lower metal cladding layers circumscribing a ceramic-metal matrix composite layer; and
machining the thin plate into a circular disk with smooth surfaces.

13. A method of forming a metal-clad ceramic-metal matrix composite rigid disk substrate for magnetic disk recording media as defined in preceding claims 5, 6 and 7, the method comprising the steps of:
forming a billet having a solid interior of ceramic-metal matrix composite surrounded by an exterior of metal cladding material;
extruding the billet through a die to form a clad plate;
rolling the clad plate to produce a thin sheet with a cross-sectional sandwich structure of upper and lower metal cladding layers circumscribing a ceramic-metal matrix composite layer; and
machining the thin sheet into a circular disk with smooth surfaces.

14. A method of forming a metal-clad ceramic-metal matrix composite rigid disk substrate for magnetic disk recording media as defined in preceding claims 5, 6 and 7, the method comprising the steps of:
interposing a sheet of ceramic-metal matrix composite between two sheets of metal to form a sandwich structure;
rolling the sandwich structure to metallurgically bond the sheet of ceramic-metal matrix composite with the two sheets of metal to form a thin plate; and
machining the thin plate into a circular disk with smooth surfaces.

15. A method of forming a metal-clad ceramic-metal matrix composite rigid disk substrate for magnetic disk recording media as defined in preceding claims 5, 6 and 7, the method comprising the steps of:
forming a plate having a sandwich structure consisting of metal layers cladding a ceramic-metal matrix composite;
rolling the sandwich structure to form a thin sheet; and
machining the thin sheet into a circular disk with smooth surfaces.

16. A method of forming a metal-clad ceramic-metal matrix composite rigid disk substrate for magnetic disk recording media as defined in preceding claims 5, 6 and 7, the method comprising the steps of:
forming a circular plate of ceramic-metal matrix composite, the circular plate having top and bottom surfaces; and
forming a metal cladding layer on each of the top and bottom surfaces of the circular plate to produce a sandwich structure,
wherein the metal matrix material is aluminum or an aluminum alloy.

17. A method of forming a metal-clad ceramic metal matrix composite rigid disk substrate according to claim 16, wherein the step of forming the metal cladding layer comprises depositing the metal cladding layer onto the circular plate using a physical vapor deposition technique, preferably sputtering, a chemical vapor deposition technique or an electrochemical technique, preferably electroplating.

18. The method according to claim 17, wherein the step of forming the metal cladding layer comprises:
depositing a metal seed layer onto the circular plate; and
electroplating the metal cladding layer onto the seed layer.

## Patentansprüche

1. Verfahren zum Bilden eines Substrats für Magnetscheiben-Aufzeichnungsmedien, umfassend einen Keramik-Metallmatrix-Verbundwerkstoff, wobei der Keramik-Metallmatrix-Verbundwerkstoff durch Schritte gebildet wird, einschließend:
Mischen von trockenen Pulvern von keramischem Material und Metallmatrixmaterial zum einheitlichen Vermischen der Pulver;
Konsolidieren der Pulver durch Unterwerfen der Pulver hohen Drücken, um einen Block zu bilden, und
Sintern des Blocks bei erhöhten Temperaturen,
Walzen des Blocks zur Erzeugung einer Platte und
Verarbeiten der Platte in eine kreisförmige Scheibe,
wobei der Keramik-Metallmatrix-Verbundwerkstoff eine Zusammensetzung aufweist, die im Bereich von 1 bis 40 Gew.-% an keramischem Material und 60 bis 99 Gew.-% an Aluminium- oder Aluminiumlegierung-Metallmatrix-Material liegt.

2. Magnetscheibensubstrat, hergestellt durch das Verfahren nach Anspruch 1.

3. Substrat nach Anspruch 2, wobei das keramische Material aus der Gruppe ausgewählt ist, umfassend im wesentlichen Siliziumcarbid, Aluminiumoxid, Borcarbid, Magnesiumoxid, Siliziumoxid, Zirkoniumoxid, Berylliumoxid, Titancarbid, Titanborid, Wolframcarbid und Kombinationen davon.

4. Substrat nach Anspruch 2 oder 3, wobei die Keramik-Metallmatrix-Verbundwerkstoff-Scheibe eine Dicke von weniger als 1 mm aufweist.

5. Substrat nach einem der vorhergehenden Ansprüche, weiter umfassend eine Metallüberzugsschicht, welche jeweils die obere und untere Oberfläche der Keramik-Metallmatrix-Verbundwerkstoff-Scheibe unter Bildung einer Scheibensandwichstruktur davon bedeckt.

6. Substrat nach Anspruch 5, wobei die Metallüberzugsschicht Aluminium oder eine Aluminiumlegierung ist.

7. Substrat nach Anspruch 5 oder 6, wobei die Metallüberzugsschicht eine Dicke im Bereich von 0,025 mm bis 0,125 mm aufweist.

8. Substrat nach Anspruch 5, 6 oder 7, wobei die Scheibensandwichstruktur eine Dicke von weniger als 1 mm aufweist.

9. Magnetische Aufzeichnungsscheibe, umfassend:
das Substrat, wie in einem der vorhergehenden Ansprüche definiert,
eine Nickel-Phosphor-Schicht, getragen durch das Substrat, und
eine magnetische Aufzeichnungsschicht, welche die Nickel-Phosphor-Schicht bedeckt.

10. Magnetische Aufzeichnungsscheibe nach Anspruch 9, weiter umfassend eine Schutzschicht, welche die magnetische Aufzeichnungsschicht bedeckt.

11. Magnetische Aufzeichnungsscheibe nach Anspruch 9 oder 10, wobei das Substrat texturiert ist, um die Kopfaerodynamik zu verbessern und zu unterstützen.

12. Verfahren zum Bilden eines steifen, Metall-überzogenen Keramik-Metallmatrix-Verbundwerkstoff-Scheibensubstrats für Magnetscheibenaufzeichnungsmedien, wie in den vorhergehenden Ansprüchen 5, 6 und 7 definiert, wobei das Verfahren die Schritte umfaßt:
Bilden eines zylindrischen Barrens mit einem festen Inneren eines Keramik-Metallmatrix-Verbundwerkstoffs, umgeben durch ein Äußeres eines Metallüberzugsmaterials;
Walzen des zylindrischen Barrens, um eine dünne Platte mit einer Querschnittssandwichstruktur von oberer und unterer Metallüberzugsschicht, welche eine Keramik-Metallmatrix-Verbundwerkstoff-Schicht begrenzen, zu erzeugen und
Verarbeiten der dünnen Platte in eine kreisförmige Scheibe mit glatten Oberflächen.

13. Verfahren zum Bilden eines steifen, Metall-überzogenen Keramik-Metallmatrix-Verbundwerkstoff-Scheibensubstrats für Magnetscheibenaufzeichnungsmedien, wie in den vorhergehenden Ansprüchen 5, 6 und 7 definiert, wobei das Verfahren die Schritte umfaßt:
Bilden eines Barrens mit einem festen Inneren eines Keramik-Metallmatrix-Verbundwerkstoffs, umgeben durch ein Äußeres eines Metallüberzugsmaterials;
Extrudieren des Barrens durch eine Düse, um eine Überzugsplatte zu bilden;
Walzen der Überzugsplatte, um eine dünne Scheibe mit einer Querschnittssandwichstruktur von oberer und unterer Metallüberzugsschicht, welche eine Keramik-Metallmatrix-Verbundwerkstoff-Schicht begrenzen, zu erzeugen, und
Verarbeiten der dünnen Scheibe in eine kreisförmige Scheibe mit glatten Oberflächen.

14. Verfahren zum Bilden eines steifen, Metall-überzogenen Keramik-Metallmatrix-Verbundwerkstoff-Scheibensubstrats für Magnetscheibenaufzeichnungsmedien, wie in den vorhergehenden Ansprüchen 5, 6 und 7 definiert, wobei das Verfahren die Schritte umfaßt:
Zwischenlegen einer Lage eines Keramik-Metall-Matrix-Verbundwerkstoffs zwischen zwei Lagen von Metall, um eine Sandwichstruktur zu bilden;
Walzen der Sandwichstruktur, um metallurgisch die Schicht des Keramik-Metallmatrix-Verbundwerkstoffs mit den zwei Lagen von Metall unter Bildung einer dünnen Platte zu binden, und
Verarbeiten der dünnen Platte in eine kreisförmige Scheibe mit glatten Oberflächen.

15. Verfahren zum Bilden eines steifen, Metall-überzogenen Keramik-Metallmatrix-Verbundwerkstoff-Scheibensubstrats für Magnetscheibenaufzeichnungsmedien, wie in den vorhergehenden Ansprüchen 5, 6 und 7 definiert, wobei das Verfahren die Schritte umfaßt:
Bilden einer Platte mit einer Sandwichstruktur, bestehend aus Metallschichten, welche einen Keramik-Metallmatrix-Verbundwerkstoff überziehen;
Walzen der Sandwichstruktur, um eine dünne Lage zu bilden, und
Verarbeiten der dünnen Lage in eine kreisförmige Scheibe mit glatten Oberflächen.

16. Verfahren zum Bilden eines steifen, Metall-überzogenen Keramik-Metallmatrix-Verbundwerkstoff-Scheibensubstrats für Magnetscheibenaufzeichnungsmedien, wie in den vorhergehenden Ansprüchen 5, 6 und 7 definiert, wobei das Verfahren die Schritte umfaßt:
Bilden einer kreisförmigen Platte von Keramik-Metallmatrix-Verbundwerkstoff, wobei die kreisförmige Platte eine obere und eine untere Oberfläche aufweist, und
Bilden einer Metallüberzugsschicht auf jeder der oberen und unteren Oberfläche der kreisförmigen Platte, um eine Sandwichstruktur zu erzeugen,
wobei das Metallmatrixmaterial Aluminium oder eine Aluminiumlegierung ist.

17. Verfahren zum Bilden eines steifen, Metall-überzogenen Keramik-Metallmatrix-Verbundwerkstoff-Scheibensubstrats für Magnetscheibenaufzeichnungsmedien nach Anspruch 16, wobei der Schritt des Bildens der Metall-überzugsschicht das Abscheiden der Metallüberzugsschicht auf der kreisförmigen Platte unter Verwendung einer physikalischen Dampfabscheidungstechnik, vorzugsweise Sputtern, einer chemischen Dampfabscheidungstechnik oder einer elektrochemischen Technik, vorzugsweise Elektroplattieren, umfaßt.

18. Verfahren nach Anspruch 17, wobei der Schritt des Bildens der Metallüberzugsschicht umfaßt:
Abscheiden einer Metallkeimschicht auf der kreisförmigen Platte und
Elektroplattieren der Metallüberzugsschicht auf der Keimschicht.

## Revendications

1. Procédé de formation d'un substrat pour des supports d'enregistrement à disque magnétique comprenant un composite céramique-matrice métallique, dans lequel le composite céramique-matrice métallique est formé par les étapes consistant à :
mélanger des poudres sèches de matériau céramique et de matériau de matrice métallique pour mélanger uniformément les poudres ;
consolider les poudres en soumettant les poudres à des pressions élevées pour former une billette ; et
fritter la billette à des températures élevées,
laminer la billette pour produire une plaque, et
usiner la plaque en un disque circulaire,
dans lequel le composite céramique-matrice métallique a une composition variant de 1 à 40 % à poids de matériau céramique et de 60 à 99 % en poids de matériau de matrice métallique en aluminium ou en alliage d'aluminium.

2. Substrat de disque magnétique fabriqué selon la revendication 1.

3. Substrat selon la revendication 2, dans lequel le matériau céramique est choisi dans le groupe consistant en le carbure de silicium, l'oxyde d'aluminium, de carbure de bore, l'oxyde de magnésium, l'oxyde de silicium, l'oxyde de zirconium, l'oxyde de béryllium, le carbure de titane, le borure de titane, le carbure de tungstène, et les combinaisons de ceux-ci.

4. Substrat selon la revendication 2 ou 3, dans lequel le disque composite céramique-matrice métallique a une épaisseur inférieure à 1 mm.

5. Substrat selon l'une quelconque des revendications précédentes, comprenant en outre une couche de revêtement de métal couvrant chacune des surfaces supérieure et inférieure du disque composite céramique-matrice métallique pour former une structure en sandwich de disque de celui-ci.

6. Substrat selon la revendication 5, dans lequel la couche de revêtement de métal est de l'aluminium ou un alliage d'aluminium.

7. Substrat selon la revendication 5 ou 6, dans lequel la couche de revêtement de métal a une épaisseur variant de 0,025 mm à 0,125 mm.

8. Substrat selon la revendication 5, 6 ou 7, dans lequel la structure en sandwich de disque a une épaisseur inférieure à 1 mm.

9. Disque d'enregistrement magnétique comprenant :
le substrat tel que défini dans l'une quelconque des revendications précédentes ;
une couche de nickel-phospore supportée par le substrat ; et
une couche d'enregistrement magnétique couvrant la couche de nickel-phosphore.

10. Disque d'enregistrement magnétique selon la revendication 9, comprenant en outre un revêtement protecteur couvrant la couche d'enregistrement magnétique.

11. Disque d'enregistrement magnétique selon la revendication 9 ou 10, dans lequel le substrat est texturé pour améliorer et assister l'aérodynamique de tête.

12. Procédé de formation d'un substrat de disque rigide composite céramique-matrice métallique revêtu de métal pour des supports d'enregistrement à disque magnétique tels que définis dans l'une quelconque des revendications précédentes 5, 6 et 7, le procédé comprenant les étapes consistant à :
former une billette cylindrique ayant un intérieur solide de composite céramique-matrice métallique entouré par un extérieur de matériau de revêtement de métal ;
laminer la billette cylindrique pour produire une plaque fine avec une structure en sandwich en coupe transversale de couches de revêtement de métal inférieure et supérieure circonscrivant une couche composite céramique-matrice métallique ; et
usiner la plaque fine en un disque circulaire avec des surfaces lisses.

13. Procédé de formation d'un substrat de disque rigide composite céramique-matrice métallique revêtu de métal pour des supports d'enregistrement à disque magnétique tels que définis dans les revendications précédentes 5, 6, 7, le procédé comprenant les étapes consistant à :
former une billette ayant un intérieur solide de composite céramique-matrice métallique entouré par un extérieur de matériau de revêtement de métal ;
extruder la billette à travers une filière pour former une plaque de revêtement ;
laminer la plaque de revêtement pour former une feuille fine avec une structure en sandwich en section transversale de couches de revêtement de métal supérieure et inférieure circonscrivant une couche composite céramique-matrice métallique ; et
usiner la plaque fine en un disque circulaire avec des surfaces lisses.

14. Procédé de formation d'un substrat de disque rigide composite céramique-matrice métallique revêtu de métal pour des supports d'enregistrement magnétique tels que définis dans les revendications précédentes 5, 6 et 7, le procédé comprenant les étapes consistant à :
interposer une feuille de composite céramique-matrice céramique entre deux feuilles de métal pour former une structure en sandwich ;
laminer la structure en sandwich pour lier métallurgiquement la feuille de composite céramique-matrice métallique avec les deux feuilles de métal pour former une plaque fine ; et
usiner la plaque fine en un disque circulaire avec des surfaces lisses.

15. Procédé de formation d'un substrat de disque rigide composite céramique-matrice métallique revêtu de métal pour des supports d'enregistrement magnétique tels que définis dans les revendications précédentes 5, 6 et 7, le procédé comprenant les étapes consistant à :
former une plaque ayant une structure en sandwich consistant en des couches de métal revêtant un composite céramique-matrice métallique ;
laminer la structure en sandwich pour former une feuille fine ; et
usiner la feuille fine en un disque circulaire avec des surfaces lisses.

16. Procédé de formation d'un substrat de disque rigide composite céramique-matrice métallique revêtu de métal pour des supports d'enregistrement magnétique tels que définis dans les revendications précédentes 5, 6 et 7, le procédé comprenant les étapes consistant à :
former une plaque circulaire de composite céramique-matrice métallique, la plaque circulaire ayant des surfaces supérieure et inférieure ; et
former une couche de revêtement de métal sur chacune des surfaces supérieure et inférieure de la plaque circulaire pour former une structure en sandwich,
dans lequel le matériau de la matrice métallique est de l'aluminium ou un alliage d'aluminium.

17. Procédé de formation d'un substrat de disque rigide composite céramique-matrice métallique revêtu de métal selon la revendication 16, dans lequel l'étape de formation de couche de revêtement de métal comprend le dépôt de la couche de revêtement de métal sur la plaque circulaire en utilisant une technique de dépôt de vapeur physique, de préférence une pulvérisation cathodique, une technique de dépôt de vapeur chimique ou une technique électrochimique, de préférence un électroplacage.

18. Procédé selon la revendication 17, dans lequel l'étape de formation de la couche de revêtement de métal comprend les étapes consistant à :
déposer une couche de germe de métal sur la plaque circulaire ; et
électroplaquer la couche de revêtement de métal sur la couche de germe.
